# EUROPÄISCHE PATENTSCHRIFT

(11) **EP 4 670 113 B1**
(45) Veröffentlichungstag und Bekanntmachung des Hinweises auf die Patenterteilung: **19.08.2026**
(21) Anmeldenummer: 25722849.4
(22) Anmeldetag: 28.04.2025
(51) Int. Cl.: G06V 10/24, G06T 5/70

(54) **VERFAHREN ZUR BILDKORREKTUR VON BILDSTÖRUNGEN IN EINER DIGITALEN BILDAUFNAHME**
METHOD FOR IMAGE CORRECTION OF IMAGE DISTURBANCES IN A DIGITAL IMAGE RECORDING
PROCÉDÉ DE CORRECTION D'IMAGE DE PERTURBATIONS D'IMAGE DANS UN ENREGISTREMENT D'IMAGE NUMÉRIQUE

(30) Priorität: 29.04.2024 AT 503602024
(43) Veröffentlichungstag der Anmeldung: 31.12.2025
(73) Patentinhaber: Vexcel Imaging GmbH, 8010 Graz (AT)
(72) Erfinder: PONTICELLI, Martin, 8041 Graz (AT); DOHR, Stefan, 8720 Knittelfeld (AT); MUICK, Marc, 8071 Hausmannstätten (AT); NEUNER, Christian, 8042 Graz (AT); TSCHEMMERNEGG, Helfried, 8552 Eibiswald (AT)
(74) Vertreter: Weiss Patentanwalts GmbH
(86) Internationale Anmeldenummer: PCT/EP2025/061517
(87) Internationale Veröffentlichungsnummer: WO 2025/228880

(56) Entgegenhaltungen:
- EP-B1- 2 574 216
- WO-A1-2023/186848
- BENHOOD RASTI ET AL: "Image Restoration for Remote Sensing: Overview and Toolbox", ARXIV.ORG, CORNELL UNIVERSITY LIBRARY, 201 OLIN LIBRARY CORNELL UNIVERSITY ITHACA, NY 14853, 21 November 2022 (2022-11-21), XP091373100, DOI: 10.1109/MGRS.2021.3121761

## Beschreibung

Die gegenständliche Erfindung betrifft ein Verfahren zur Bildkorrektur eines störungsbehafteten Bildes F eines Objekts in ein störungsreduziertes Bild U des Objekts, wobei mit einem Bildsensor einer Digitalkamera eine Bildaufnahme des Objekts aufgenommen wird und die Bildaufnahme aus einer Mehrzahl n von Bildpunkten besteht und aufgrund verschiedener Einflussfaktoren das störungsbehaftete Bild F des Objekts enthält, wobei ein Zusammenhang zwischen dem aufgenommenen störungsbehafteten Bild F des Objekts und dem störungsreduzierten Bild U des Objekts in Vektor-Matrix-Notation mit einen Bildstörungsoperator A beschrieben wird, wobei das störungsbehaftete Bild F und das störungsreduzierte Bild U als die Bildpunkte umfassende Vektoren beschrieben werden und der Bildstörungsoperator A als Matrix der Dimension n x n beschrieben wird, und das störungsreduzierte Bild U aus dem aufgenommenen störungsbehafteten Bild F mittels einer in einer Korrektureinheit durchgeführten Optimierung ${min}_{U} {θ}_{1} \left(U, F, A\right)$ gewonnen wird, wobei θ₁ eine vorgegebene Zielfunktion der Optimierung ist, die eine Abweichung zwischen dem störungsbehafteten Bild F und dem transformierten störungsreduzierten Bild AU bewertet. Bei einer digitalen Bildaufnahme entstehen aus verschiedenen Einflussfaktoren unvermeidbare Bildstörungen im aufgenommenen Bild. Es entsteht damit durch die Bildaufnahme ein störungsbehaftetes Bild, wobei die Störung beispielsweise in Form einer Unschärfe im Bild gegebenen ist. In einer Digitalkamera ist ein Bildsensor mit einer Anordnung von Lichtdetektoren für jeden Kanal der Bildaufnahme (beispielsweise 3 Kanäle bei einem RGB-Sensor) vorgesehen, wobei jeder Lichtdetektor einen Bildpunkt (Pixel) repräsentiert. Häufig verwendete Bildsensoren sind bekannte CCD-Sensoren oder CMOS-Sensoren. Die Bildstörungen können von Eigenschaften des optischen Systems oder des Bildsensors herrühren, oder aber auch aufgrund von Bewegung der Kamera oder des aufgenommen Objekts während der Belichtungszeit herrühren. Daher werden auf aufgenommene Bilder oftmals verschiedene Bildkorrekturen angewendet, um die Bildstörungen zu korrigieren, wobei korrigieren hier in der Regel nur eine Reduktion der Bildstörungen bedeutet, aber nicht notwendigerweise eine vollständige Entfernung der Bildstörungen.

Bei der Aufnahme eines Bildes mit einer Kamera von einem bewegten Fahrzeug aus ergeben sich beispielsweise aufgrund der Bewegung des Fahrzeugs während der Belichtungszeit Bildstörungen in Form von Bildunschärfen, sogenannten Bewegungsunschärfen. Diese sind darin begründet, dass sich die Kamera während der Belichtungszeit relativ zum aufzunehmenden Objekt bewegt und somit während der Belichtungszeit ein Bildpunkt (Pixel im Falle einer Digitalaufnahme) der Kamera auf unterschiedliche Punkte des Objekts gerichtet ist. Die Relativbewegung zwischen dem aufzunehmenden Objekt und der Kamera kann auf der Bewegung des Fahrzeugs beruhen, auf der Bewegung der Kamera relativ zum Fahrzeug, auf der Bewegung des Objekts oder auf einer beliebigen Kombination dieser. Eine Relativbewegung zwischen Kamera und Objekt kann aber auch auftreten, wenn die Kamera nicht in einem bewegten Fahrzeug angeordnet ist, was ebenso zu einer Bewegungsunschärfe im Bild führt. Derartige Bewegungsunschärfen im Bild lassen sich während der Aufnahme des Bildes mit erheblichem technischem Aufwand zwar einschränken, aber nicht vollständig vermeiden.

Zur Verringerung der Bewegungsunschärfe ist es beispielsweise bekannt, den Bildsensor der Kamera während der Belichtungszeit mittels eines Antriebs in einer auf eine Bewegung des Fahrzeuges (also beispielsweise auf die Fluggeschwindigkeit eines Flugzeugs oder eines anderen Fluggeräts) abgestimmten Bewegung zu verschieben, sodass jeder Pixel des Bildsensors möglichst genau auf einen bestimmten Punkt des Objekts ausgerichtet bleibt. Das ist auch unter Forward Motion Compensation bekannt. Dadurch kann jedoch nur eine bekannte Vorwärtsbewegung des Fahrzeuges ausgeglichen werden. Andere Bewegungen und Beschleunigungen, insbesondere ein Nicken, Gieren oder Rollen des Fahrzeuges, wie es bei Flugzeugen beispielsweise beim Durchfliegen von Turbulenzen oder aufgrund von Vibrationen auftreten kann, können auf diese Weise nicht ausgeglichen werden. Abgesehen davon erhöht eine Forward Motion Compensation natürlich auch die Komplexität und Kosten des Kamerasystems. Bis zu einem gewissen Ausmaß können störende und unerwartete Bewegungen des Fahrzeugs oder der Kamera durch eine stabilisierende Kameraaufhängung ausgeglichen werden, doch auch dieser sind technische Grenzen gesetzt, sodass sich damit durch Bewegung hervorgerufene Bewegungsunschärfe nur unzureichend oder gar nicht beheben lassen. Auch eine solche Kameraaufhängung erhöht zudem die Komplexität und die Kosten des Kamerasystems.

In letzter Zeit haben insbesondere Bildschärfungsverfahren zur nachträglichen Korrektur der Bewegungsunschärfe im Bild verbreitet Einsatz gefunden. Mit solchen Bildschärfungsverfahren können Bewegungsunschärfen im aufgenommenen digitalen Bild nachträglich kompensiert werden. Dabei werden üblicherweise Faltungsmatrizen (oftmals "Blur Kernel" genannt) errechnet, die das scharfe Bild durch eine mathematische Faltungsoperation auf das unscharfe Bild abbilden. Diesem Ansatz liegt die Idee zugrunde, dass das unscharfe, aufgenommene Bild und das darin versteckte scharfe Bild über den Blur Kernel verbunden sind. Kennt man den Blur Kernel, kann in Folge durch eine mathematische Entfaltungsoperation (Umkehroperation zur Faltung) das scharfe Bild aus dem unscharfen Bild berechnet werden. Das grundlegende Problem dabei ist, dass der Blur Kernel üblicherweise nicht bekannt ist. In gewissen Ansätzen wird der Blur Kernel aus dem unscharfen Bild abgeleitet, was auch als Blind-Deconvolution bezeichnet wird. In anderen Ansätzen wird der Blur Kernel aus der bekannten Bewegung der Kamera relativ zum aufgenommenen Objekt ermittelt, was auch als Non-Blind-Deconvolution bezeichnet wird.

Um die Bewegung der Kamera zu erfassen können geeignete Sensoren, wie Beschleunigungssensoren, Gyrosensoren, Trägheitssensoren usw., an der Kamera selbst oder am bewegten Teil an dem die Kamera angeordnet ist (z.B. Fahrzeug) verwendet werden. Mit der bekannten Bewegung des Fahrzeugs in einem Geokoordinatensystem und gegebenenfalls mit der bekannten Bewegung der Kamera relativ zum Fahrzeug kann beispielsweise auf die Relativbewegung der Kamera zum Objekt rückgeschlossen werden. Aus der WO 2023/186848 A1 ist beispielsweise ein Verfahren zur Korrektur einer Bewegungsunschärfe in einem Bild bekannt, wobei darin keine weiteren Bildstörungen im störungsbehafteten Bild korrigiert werden können. Zum weiteren Stand der Technik gehören: EP2574216B1 und BENHOOD RASTI ET AL: "Image Restoration for Remote Sensing: Overview and Toolbox",ARXIV.ORG, CORNELL UNIVERSITY LIBRARY, 201 OLIN LIBRARY CORNELL UNIVERSITY ITHACA, NY 14853, 21. November 2022 (2022-11-21), XP091373100,DOI: 10.1109/ MGRS.2021.3121761.

Neben der Bewegungsunschärfe gibt es jedoch noch eine Reihe von weiteren Einflussfaktoren, die das mit einer Kamera aufgenommene Bild beeinflussen und zu einer Bildstörung im aufgenommenen Bild führen. Das aufgenommene Bild kann dabei vom optischen System der Kamera beeinflusst werden, vom Bildsensor oder auch von Rauscheffekten. Im Bereich des optischen Systems sind beispielsweise die Vignettierung, oder die Linsenunschärfe störende Einflussfaktoren. Im Bereich des Bildsensors sind beispielsweise ein unterschiedlicher Pixeloffset oder eine unterschiedliche Pixelverstärkung einzelner Pixel störende Einflussgrößen. Aber auch Effekte wie Sättigung einzelner Pixel, defekte Pixel, usw. haben natürlich einen störenden Einfluss auf das aufgenommene Bild. In der Photographie sind darüber hinaus noch der Weißabgleich und der Helligkeitsabgleich übliche Korrekturen. Auch solche Bildstörungen werden versucht mit mathematischen Verfahren zu korrigieren, um ein störungsreduziertes Bild zu erhalten.

Vor allem im Bereich der Photogrammetrie, beispielsweise für Anwendungen im Bereich der Geomatik, sind die Anforderungen an die Qualität von Bildaufnahmen sehr hoch. Beispielsweise ist es wichtig, dass sich die Position, Lage und die Kontur von aufgenommenen Objekten im aufgenommenen Bild nicht verschieben oder verschwimmen. Bildaufnahmen werden bei solchen Anwendungen häufig mittels bewegter Fahrzeuge durchgeführt, oftmals mittels Luftfahrzeuge, was zur oben genannten Bewegungsunschärfe führen kann.

Um die Qualität der digitalen Bildaufnahmen zu verbessern ist es heute üblich, verschiedene Bildkorrekturen auf die digitale Bildaufnahme anzuwenden, um Bildstörungen in der Bildaufnahme aufgrund verschiedener Einflussfaktoren zumindest zu reduzieren, im Idealfall gänzlich zu kompensieren. Gängige Bildkorrekturen sind die Korrektur von variierendem Pixeloffset und variierender Pixelverstärkung, die Korrektur defekter oder gesättigter Pixel, die Korrektur der Vignettierung, der Weißabgleich, der Helligkeitsabgleich, die Korrektur der Bewegungsunschärfe, das Entrauschen ("denoising") oder die Korrektur der Linsenunschärfe.

Die verschiedenen Bildkorrekturen werden hintereinander auf ein aufgenommenes Bild angewandt. Das hat aber Nachteile. Gewisse Bildkorrekturverfahren verstärken beispielsweise das Rauschen oder Bildfehler in den Bilddaten, die auch von vorhergehenden Korrekturschritten eingefügt worden sein können. Durch das hintereinander folgende Korrigieren von durch einzelne Einflussfaktoren hervorgerufenen Bildstörungen können die Bildstörungen im aufgenommenen Bild insbesondere oftmals nicht genau genug korrigiert werden.

Es besteht daher ein Bedarf an einer verbesserten Bildkorrektur von verschiedenen störenden Einflussfaktoren in einem mit einer Digitalkamera aufgenommen Bild, um Bildaufnahmen mit hoher Qualität, insbesondere hoher Bildschärfe und Detailtreue, zu ermöglichen.

Das wird mit einem erfindungsgemäßen Verfahren nach Anspruch 1 gelöst. Der Vorteil des erfindungsgemäßen Verfahrens liegt darin, dass ein gesamteinheitliches Modell der Bildstörungen verwendet wird, in dem alle Einflussfaktoren einfließen und damit die Einflussfaktoren allesamt in die Optimierung zur Gewinnung des störungsreduzierten Bildes einfließen. Das führt zu einer verbesserten Bildaufnahme, beispielsweise zu einer besseren Bildschärfe, weil allfällige Querabhängigkeiten der verschiedenen Korrekturschritte durch das erfindungsgemäße Vorgehen implizit berücksichtigt werden. Im störungsreduzierten Bild sind insbesondere auch feine Strukturen und Details gut erkennbar. Wenn Rauschen berücksichtigt wird, dann wird durch das erfindungsgemäße Vorgehen insbesondere auch ein besseres Rauschverhalten, sowohl in schattigen, als auch in hellen Bereichen der Bildaufnahme erzielt, und behält gleichzeitig feine Strukturen und Details.

Ein besonderer Vorteil des erfindungsgemäßen Vorgehens ist darin zu sehen, dass als Einzelfaltungsmatrix eine Punktspreizfunktion zur Korrektur einer Linsenunschärfe verwendet werden kann. Damit kann die Linsenunschärfe unmittelbar in das Modell der Bildunschärfe einfließen und kann direkt in der Optimierung berücksichtigt werden. Das liefert ein Bild, in dem die Bildstörungen besonders gut korrigiert sind.

Zusätzlich ermöglicht das erfindungsgemäße Vorgehen auch, weitere Effekte zu berücksichtigen, wie ungültige Pixel in der Bildaufnahme oder auch eine Transformation von einem bestimmten Bildsensortyp auf ein bestimmtes anderes Format (wie RGB) der Bildaufnahme. Solche weiteren Effekte sind damit Teil des gesamteinheitlichen Modells.

Besonders vorteilhaft wird die Bildaufnahme in Bildpunktbereiche unterteilt, in denen räumlich invariante Bildstörung durch Faltungs-Einflussfaktoren angenommen wird. Damit reduziert sich das aus dem Optimierungsproblem ergebende Gleichungssystem auf lokale lineare Gleichungssysteme, die effizienter und mit weniger Rechenaufwand gelöst werden können.

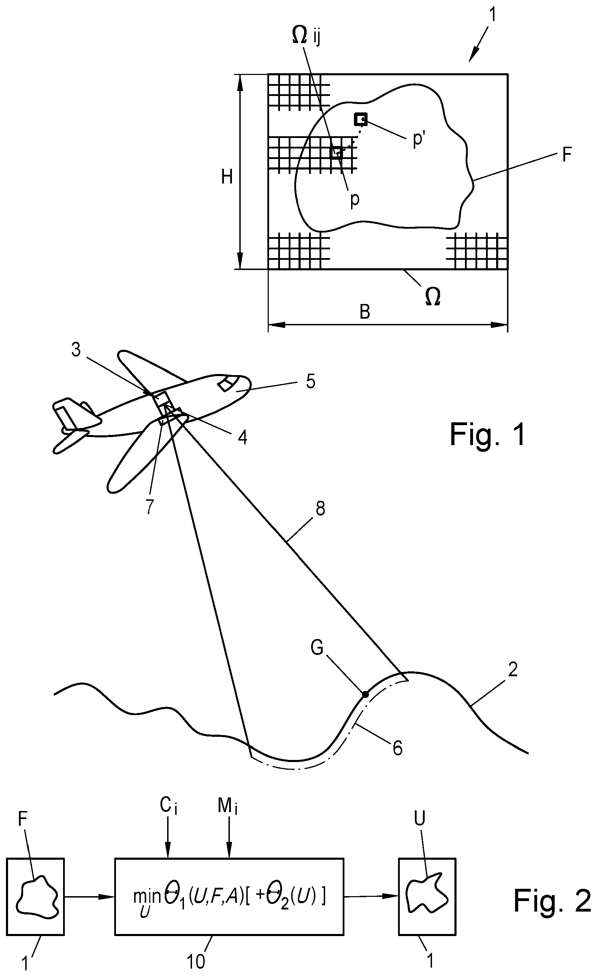

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
- Fig.1: Zusammenhänge bei einer Bildaufnahme eines Objekts und
- Fig.2: eine erfindungsgemäße Bildkorrektur.

Die Erfindung geht von einem mit einer Digitalkamera 3, konkret mit einem Bildsensor 4 der Digitalkamera 3, aufgenommen Bildaufnahme 1 mit einer bestimmten Bildauflösung in Form einer Vielzahl n von Bildpunkten (Pixel) p aus. Die Bildaufnahme 1 wird beispielsweise von einem bewegten Fahrzeug 5 aus aufgenommen, was aber keine notwendige Voraussetzung für die erfindungsgemäße Bildkorrektur ist.

In Fig.1 ist schematisch ein Fahrzeug 5 (hier ein Luftfahrzeug, beispielsweise ein Flugzeug oder eine Drohne) dargestellt, welches sich bewegt (hier über Grund), und dabei mit einer an dem Fahrzeug 5 montierten Digitalkamera 3 eine Bildaufnahme 1 eines Objekts 2, hier einer Geländestruktur, erstellt. In Fig.1 ist in einer schematischen Darstellung eine Bildaufnahme 1, die von dem Fahrzeug 5 aus mit der Digitalkamera 3 aufgenommen wurde, beispielhaft dargestellt. Die Bildaufnahme 1 umfasst einen Bildbereich Ω, der alle Bildpunkte p der Bildaufnahme 1 enthält. Die Bildaufnahme 1 ist eine digitale Bildaufnahme, beispielsweise mit einer Anzahl B von Pixeln in der Breite und einer Anzahl H von Pixeln in der Höhe (digitale Bildpunkte p), was auch die Bildauflösung definiert. Die Bildaufnahme 1 entsteht an einer Bildebene der Digitalkamera 3, an der ein Bildsensor 4 mit einer Anordnung an Lichtdetektoren angeordnet ist, die die Bildpunkte p ausbilden. Der Bildsensor 4 ist beispielsweise ein RGB-Sensor oder ein Bayer-Pattern Sensor.

Die Lage und Orientierung der Digitalkamera 3 und deren mit einer Optikeinheit 7 (mit zumindest einer Linse) eingestelltes Sichtfeld 8 bestimmen in Verbindung mit der Form des Objekts 2 einen Aufnahmebereich 6, der in Fig.1 schematisiert als Strich-Punkt-Linie angedeutet ist. Der Übersichtlichkeit halber ist das Objekt 2 in Fig.1 als zweidimensionale Linie dargestellt. Es ist jedoch klar, dass der Aufnahmebereich 6 in der Regel eine Fläche ist, die üblicherweise einer im Wesentlichen rechteckigen Projektion auf das Objekt 2 entspricht.

Die in der dargestellten Lage von der Digitalkamera 3 gemachte digitale Bildaufnahme 1 ist in Fig.1 schematisch dargestellt, wobei ein Bildpunkt p im Bildbereich Ω (Pixel Ωᵢⱼ) aufgrund der optischen Eigenschaften des Kamerasystems einem Objektpunkt G im Aufnahmebereich 6 zugeordnet werden kann. Tatsächlich ist diese Zuordnung jedoch nicht immer eindeutig, da sich die Position des Fahrzeugs 5 und/oder der Kamera 3 während der für die Aufnahme erforderlichen Belichtungszeit in Bewegungsrichtung des Fahrzeugs 5 weiterbewegen kann und/oder anderen translatorischen und/oder rotatorischen Bewegungen unterworfen ist, beispielsweise aufgrund von Vibrationen, Turbulenzen usw. Insbesondere eine Rotation um eine der Achsen (was im Zusammenhang mit Luftfahrzeugen üblicherweise als Rollen, Nicken und Gieren bezeichnet wird) des Fahrzeugkoordinatensystems kann eine sehr deutliche Verschiebung des Aufnahmebereichs 6 am Objekt 2 zur Folge haben. Dabei kann sich die Position des Objektpunkts G in der Bildaufnahme 1 (dies entspricht zum Beginn der Aufnahme dem Bildpunkt p in Fig.1) während der Belichtungszeit verschieben (dies entspricht dem Bildpunkt p' in Fig.1). Anders ausgedrückt, kann ein Bildpunkt p im Bildbereich Ω während der Belichtung Licht von unterschiedlichen Objektpunkten G empfangen. Das führt insbesondere zu einer Bewegungsunschärfe im aufgenommenen Bild.

Auch andere Einflussfaktoren wie oben ausgeführt können dazu führen, dass die Abbildung eines Objektpunkts G in einen Bildpunkt p der Bildaufnahme 1 nicht wie theoretisch erwartet ist. Die mit der Kamera während der Belichtungszeit aufgenommene Bildaufnahme 1 kann daher noch von weiteren oder anderen Einflussfaktoren beeinflusst werden, wie unten ausgeführt ist.

Diese Einflussfaktoren führen dazu, dass in der Bildaufnahme 1 ein störungsbehaftetes Bild F des aufgenommen Objekts 2 enthalten ist.

Die Erfindung wird nachfolgend ohne Einschränkung der Allgemeinheit für eine Bildaufnahme 1 mit einem Kanal beschrieben, kann aber natürlich auf mehrere Kanäle verallgemeinert werden. Bei einem RGB-Bildsensor gibt es beispielsweise drei Kanäle (rot, grün, blau). Ein Bayer-Pattern Sensor hat beispielsweise einen Kanal, wobei aufgrund von Farbfiltern über der Bildebene verschiedene Pixel verschiedene Wellenlängen des Lichts aufnehmen, beispielsweise wieder RGB.

Zur Korrektur einer Bildstörung in der Bildaufnahme 1 kann bekanntermaßen ein Zusammenhang des unbekannten störungsreduzierten Bildes U und des mit der Bildaufnahme 1 aufgenommenen störungsbehafteten Bildes F in der Form *F* = *AU*[+*η*] verwendet werden, mit einem Bildstörungsoperator A der eine bestimmte Bildstörung modelliert. *η* bezeichnet optional (ausgedrückt durch die eckige Klammer) berücksichtigtes Rauschen, beispielsweise weißes Rauschen als Normalverteilung *η* □ *N* (0,*σ*) mit einer vorgegebenen Standardabweichung σ, das der Bildsensor 4 der Kamera 3 zusätzlich aufnimmt. Diese Schreibweise ist beispielsweise in Vektor-Matrix-Notation, also mit den Vektoren F, U, die alle n Bildpunkte p beinhalten, und der Matrix A in Form einer Matrix der Dimension n x n. Es ist aber auch eine andere Notation denkbar, beispielsweise mit Matrizen U, F.

Dieser Ansatz ist aus WO 2023/186848 A1 für die Korrektur einer Bewegungsunschärfe bekannt, wobei der Bildstörungsoperator A ein Blur Kernel (Faltungsmatrix) ist. Darin wird beschrieben, dass im Blur Kernel auch andere Kameraeinflüsse (wie die Vignettierung, Verzeichnung) auf die Bewegungsunschärfe berücksichtigt werden können. Hier geht es folglich nicht um die Korrektur der Einflüsse, sondern lediglich um den Einfluss der Faktoren auf das Modell der Bewegungsunschärfe. Das korrigiert aber nicht den Einfluss der Vignettierung oder Verzeichnung des optischen Systems der Kamera 3 auf das störungsbehaftete Bild, sondern nur den Einfluss der Vignettierung oder Verzeichnung auf die Bewegungsunschärfe. Die Vignettierung oder Verzeichnung im aufgenommenen Bild wird damit nicht korrigiert. WO 2023/186848 A1 beschreibt damit die Bildkorrektur einer Bildstörung, die von einem einzigen Einflussfaktor (Bewegung) hervorgerufen wird. Zur Korrektur von Bildstörungen, die von weiteren Einflussfaktoren verursacht werden, müssten weitere Bildkorrekturen angewendet werden.

Es ist auch bekannt, dass das Gleichungssystem *F = AU*[+*η*] (mit einer entsprechenden Gleichung für jeden Bildpunkt p im Bild) im Falle einer Bewegungsunschärfe nicht direkt nach U aufgelöst werden kann. Um das störungsreduzierte Bild U aus dem aufgenommenen störungsbehafteten Bild F zu rekonstruieren wird daher üblicherweise ein Optimierungsproblem der Form ${min}_{U} {θ}_{1} \left(U, F, A\right) \left[+{θ}_{2}\left(U\right)\right]$ angeschrieben und das Optimierungsproblem nach U gelöst. Darin ist θ₁ eine beliebige geeignete Zielfunktion, die die Abweichung zwischen dem störungsbehafteten Bild F und dem transformierten störungsreduzierten Bild AU bewertet und die durch die Optimierung minimiert wird, um das störungsreduzierte Bild U zu rekonstruieren. θ₂ ist eine optionale Regularisierungsfunktion, mit der unerwünschte Bildeigenschaften, wie beispielsweise Rauschen, in der Optimierung bestraft werden. Damit kann mit der Regularisierungsfunktion θ₂ beispielsweise Rauschen in der Optimierung berücksichtigt werden.

Die Optimierung wird in der Regel iterativ mit einem bekannten Optimierungalgorithmus durchgeführt, bis zu einem vorgegebenen Abbruchkriterium, wie beispielsweise eine Anzahl an Iterationsschritten oder bis ein gewisser Restfehler (Abweichung zwischen transformiertem störungsreduzierten Bild AU und störungsbehaftetem Bild F) erreicht ist. Das Abbruchkriterium kann auch vom Löser für das Optimierungsproblem abhängig sein.

Eine bekannte Realisierung dieses Optimierungsproblem ist die Total-Variation (TV) Regularisation. Darin ist die Zielfunktion definiert als ${θ}_{1} \left(U, F, A\right) = \frac{μ}{2} {\left‖AU-F\right‖}_{2}^{2}$ und die Regularisierungsfunktion definiert als *θ*₂ (*U*) = *γ*∥∇*U*∥₁ , mit zu wählenden oder vorgegebenen Regularisierungsparameter µ, γ und dem bekannten Nabla-Operator ∇. ∥...∥₂ ist die Euklidische Norm und ∥...∥₁ die Summennorm mit ∥∇*U*∥₁ = Σ*ₚ*|(∇*U*)(*p*)| für alle Bildpunkte p. Eine alternative Realisierung wäre durch den bekannten Richardson-Lucy Algorithmus, wobei es daneben noch weitere bekannte Realisierungen gibt.

Löser für ein oben beschriebenes Optimierungsproblem sind hinlänglich bekannt, beispielsweise das ADMM-Verfahren (Alternating Direction Method of Multipliers) oder der Split-Bregmann Algorithmus oder der Richardson-Lucy Algorithmus.

Damit konnte bisher Bewegungsunschärfe im aufgenommenen Bild F zumindest reduziert werden und ein Bild U mit reduzierter Bewegungsunschärfe aus dem aufgenommenen Bild F rekonstruiert werden. Andere störende Einflussfaktoren auf das aufgenommene Bild konnten damit nicht reduziert oder gar kompensiert werden. Daher mussten bisher zusätzliche Bildkorrekturen angewendet werden, entweder vor oder nach der Korrektur der Bewegungsunschärfe, mit den eingangs beschriebenen Nachteilen. Um diese Nachteile zu beheben, wird erfindungsgemäß wie folgt vorgegangen.

Es werden die unterschiedlichen, Bildstörungen in der aufgenommenen Bildaufnahme 1 verursachende Einflussfaktoren in unterschiedliche Kategorien unterteilt. Hier wurden zumindest vier verschiedene Kategorien identifiziert, nämlich additive Einflussfaktoren, multiplikative Einflussfaktoren, Faltungs-Einflussfaktoren und Rausch-Einflussfaktoren.

Ein additiver Einflussfaktor ist beispielsweise der Pixeloffset, der sich als bekannter additiver Offset an jedem Bildpunkt p des Bildsensors 4 bemerkbar macht. Hier wird jeder Bildpunkt p im störungsbehafteten Bild F in definierter Weise und unabhängig von anderen Bildpunkten p der Bildaufnahme 1 durch einen additiven Wert verändert. Bezüglich dieses Einflussfaktors ist der Zusammenhang zwischen einem Bildpunkt p im störungsreduzierten Bild U und demselben Bildpunkt p im störungsbehafteten Bild F demnach durch einen additiven Summanden gegeben.

Ein multiplikativer Einflussfaktor ist beispielsweise der Weißabgleich, der Helligkeitsabgleich, die Vignettierung oder die Pixelverstärkung, also jeglicher Einfluss der multiplikativ auf einen Bildpunkt p des Bildsensors 4 wirkt. Hier wird jeder Bildpunkt p im störungsbehafteten Bild F in definierter Weise und unabhängig von anderen Bildpunkten p der Bildaufnahme 1 durch einen multiplikativen Faktor beeinflusst. Bezüglich dieses Einflussfaktors ist der Zusammenhang zwischen einem Bildpunkt p im störungsreduzierten Bild U und demselben Bildpunkt p im störungsbehafteten Bild demnach durch einen multiplikativen Faktor gegeben.

Ein Faltungs-Einflussfaktor ist beispielsweise die Bewegungsunschärfe oder Linsenunschärfe. Ein Faltungs-Einflussfaktor beschreibt einen Einfluss, bei dem ein Bildpunkt p im störungsbehafteten Bild F von verschiedenen Bildpunkten p im störungsreduzierten Bild U beeinflusst wird. Ein Bildpunkt p im störungsbehafteten Bild F ist beispielsweise gegeben durch eine gewichtete Summe von Bildpunkten p im störungsreduzierten Bild U. In Folge von Bewegung oder Linsenunschärfe wird beispielsweise ein Bildpunkt p im störungsbehafteten Bild während der Belichtungszeit von unterschiedlichen Objektpunkten G belichtet und der Bildpunkt p muss daher verschiedenen Bildpunkten p im störungsreduzierten Bild zugeordnet werden, um die Bildstörung zu korrigieren.

Ein Rausch-Einflussfaktor ist ein zufälliger Einfluss auf die Bildpunkte p im aufgenommenen störungsbehafteten Bild F, beispielsweise aufgrund von Bildsensorrauschen. Auch der Rausch-Einflussfaktor kann für jeden Bildpunkt p im störungsbehafteten Bild F separat angegeben werden, beispielsweise in Form einer stochastischen Größe. Das zugrundeliegende Rauschverhalten eines Bildpunktes p kann entsprechend angegeben werden, beispielsweise Rauschen in Form einer Normalverteilung.

Daneben können auch noch ungültige Bildpunkte p, die keine gültigen Informationen des aufgenommenen Bildes beinhalten, erfindungsgemäß berücksichtigt werden, wie nachfolgend noch ausgeführt wird. Ein ungültiger Bildpunkt p ist beispielsweise ein defekter oder gesättigter Bildpunkt des Bildsensors 4.

Additive Einflussfaktoren können direkt im störungsbehafteten Bild F korrigiert werden, beispielsweise indem die Pixeloffsets im störungsbehafteten Bild F für jeden Bildpunkt p einfach abgezogen werden, da diese Art der Korrektur keinen Einfluss auf die anderen Arten der Bildkorrektur hat. Additive Einflussfaktoren sind beispielsweise aus der Kalibrierung des in der Kamera 3 verwendeten Bildsensors 4 bekannt. Die additiven Einflussfaktoren werden daher erfindungsgemäß nicht berücksichtigt, bzw. wird davon ausgegangen, dass die additiven Einflussfaktoren im störungsbehafteten Bild F bedarfsweise schon berücksichtigt wurden.

Multiplikative Einflussfaktoren (wie z.B. Weißabgleich, der Helligkeitsabgleich, Vignettierung, Pixelverstärkung) können durch eine multiplikative Bildstörungsmatrix M der Form $M = {\prod }_{i = 0}^{{N}_{M} - 1} {M}_{i}$ berücksichtigt werden. Darin bezeichnet N_{M} die Anzahl der berücksichtigten multiplikativen Einflussfaktoren, und Mᵢ die Einzelmultiplikationsmatrizen für jeden multiplikativen Einflussfaktor. In Vektor-Matrix-Notation ist jede Einzelmultiplikationsmatrix Mᵢ eine Diagonalmatrix, der Dimension n = B x H (also der Anzahl n der Bildpunkte p). Nachdem jeder multiplikative Einflussfaktor multiplikativ ist, ergibt sich die multiplikative Bildstörungsmatrix als Matrixprodukt (Matrizenmultiplikation) der einzelnen Einzelmultiplikationsmatrizen Mᵢ. Die multiplikative Bildstörungsmatrix M ist demnach in diesem Fall eine Multiplikation von Diagonalmatrizen der Dimension n und demnach ebenfalls eine Diagonalmatrix der Dimension n (Anzahl der Bildpunkte p).

Auch die multiplikativen Einflussfaktoren können für eine bestimmte Digitalkamera 3 mit optischem System und mit einem bestimmten Bildsensor 4 als bekannt vorausgesetzt werden, beispielsweise aus einer Kamera- oder Bildsensorkalibrierung.

Faltungs-Einflussfaktoren (wie z.B. Bewegungsunschärfe oder Linsenunschärfe) können durch eine Faltungs-Bildstörungsmatrix der Form $C = {\prod }_{i = 0}^{{N}_{C} - 1} {C}_{i}$ berücksichtigt werden. Darin bezeichnet N_{C} die Anzahl der berücksichtigten Faltungs-Einflussfaktoren, und Cᵢ die Einzelfaltungsmatrix für jeden Faltungs-Einflussfaktor, beispielsweise ein Blur Operator wie aus dem Stand der Technik bekannt, beispielsweise aus WO 2023/186848 A1. In Vektor-Matrix-Notation beschreibt jede Zeile einer Einzelfaltungsmatrix Cᵢ wie ein Bildpunkt p im störungsbehafteten Bild F durch die Bildpunkte p im störungsreduzierten Bild U beeinflusst ist. Die Zeilen einer Einzelfaltungsmatrix Cᵢ, und damit auch der Faltungs-Bildstörungsmatrix C, sind damit zumindest teilweise auch außerhalb der Diagonale mit Matrixelementen ungleich Null besetzt, wobei aber auch Matrixelemente in jeder Zeile Null sein können und üblicherweise sein werden, weil nicht jeder Bildpunkt p im störungsbehafteten Bild F durch alle Bildpunkte p im störungsreduzierten Bild U beeinflusst wird. Die Beeinflussung ist in der Regel eng im Bereich weniger benachbarter Bildpunkte p.

Das erfindungsgemäße Vorgehen ermöglicht es nun aber auch, eine bekannte Punktspreizfunktion (PSF, Point Spread Function) zur Korrektur der Linsenunschärfe zu integrieren, weil die Punktspreizfunktion, so wie ein Blur Kernel, ebenfalls als Faltungsmatrix angegeben werden kann. Eine PSF kann aus Daten des Linsenherstellers oder aus Messungen gewonnen werden. Eine PSF kann auch vom Linsenhersteller angegeben sein. Im Falle einer Messung kann wie bei der Blind-Deconvolution vorgegangen werden, indem man die PSF aus einem störungsbehafteten Bild F ableitet. Die Korrektur der Linsenunschärfe mittels Kompensation der PSF gilt als die genaueste Korrektur der Linsenunschärfe.

Bisher wurde eine Linsenunschärfe durch eine insolierte Bildkorrektur mittels einer bekannten Modulationstransferfunktion (MTF, Modulation Transfer Function) korrigiert. Im Unterschied zur Modellierung der Linsenunschärfe mittels PSF wird der MTF-Korrektur nur eine Approximation der Linsenunschärfe zu Grunde gelegt, was zur Folge hat, dass per Definition nicht die gesamte, durch die Linse verursachte Unschärfe korrigiert werden kann. Dieser isolierte Korrekturschritt mittels MTF kann nun entfallen.

Eine PSF gibt im Wesentlichen an, wie ein idealisiertes, punktförmiges Objekt durch ein optisches System mit zumindest einer Linse abgebildet werden würde. Durch die Linsenunschärfe wird ein Bildpunkt p im störungsbehafteten Bild F von verschiedenen Bildpunkten p im störungsreduzierten Bild U beeinflusst. Ein Bildpunkt p im störungsbehafteten Bild F ist beispielsweise gegeben durch eine gewichtete Summe von Bildpunkten p im störungsreduzierten Bild U. Die durch Linsenunschärfe in eine Bildaufnahme 1 eingebrachte Bildstörung kann damit in Form einer Faltung des störungsreduzierten Bildes U mit der PSF modelliert werden. Eine PSF kann damit als eine Einzelfaltungsmatrix Cᵢ angegeben werden. In Vektor-Matrix-Notation beschreibt jede Zeile der Einzelfaltungsmatrix Cᵢ der Linsenunschärfe wie ein Bildpunkt p im störungsbehafteten Bild F durch die Bildpunkte p im störungsreduzierten Bild U beeinflusst ist. Der Einfluss der Linsenunschärfe ist im zentralen Bereich der Bildaufnahme 1 üblicherweise kleiner, als an den Randbereichen.

Die PSF kann dabei noch von anderen Einflussgrößen des optischen Systems abhängig sein, wie beispielsweise von der Blendeneinstellung. Auch das könnte berücksichtigt werden, beispielsweise indem die Einzelfaltungsmatrix Cᵢ der Linsenunschärfe von der Blendeneinstellung abhängig ist oder für verschiedene Blendeneinstellungen, verschiedene Einzelfaltungsmatrizen Cᵢ der Linsenunschärfe gegeben sind.

Erfindungsgemäß wird der Zusammenhang zwischen dem störungsreduzierten Bild U auf dem störungsbehafteten Bild F erweitert. Das störungsbehaftete Bild F ist damit keine nur von einem nur die Bewegungsunschärfe beschreibenden Operator A (in diesem Fall ein Blur-Kernel) abhängige Funktion, also F=g(U, A[, η]) wie bisher, sondern eine von der multiplikativen Bildstörungsmatrix M und von der Faltungs-Bildstörungsmatrix C abhängige Funktion, also F=g(U, M, C[, η]), beispielsweise $F = {{MC}_{︸}}_{A} U \left[+η\right]$. Eine allfällig berücksichtigte Bewegungsunschärfe findet darin über eine Einzelfaltungsmatrix Cᵢ Einfluss.

Auch damit kann analog zu oben beschrieben ein Optimierungsproblem aufgestellt und gelöst werden, also ${min}_{U} {θ}_{1} \left(U, F, A\right) \left[+{θ}_{2}\left(U\right)\right]$. Der Bildstörungsoperator A ist aber nun das Matrixprodukt (Matrizenmultiplikation) der multiplikativen Bildstörungsmatrix M und der Faltungs-Bildstörungsmatrix C, also *A* = *MC*. Man erhält damit eine globale Optimierung, in der sämtliche Einflussfaktoren auf einmal berücksichtigt werden. Wie schon oben beschrieben können optionale Rausch-Einflussfaktoren bedarfsweise über die Regularisierungsfunktion θ₂ berücksichtigt werden, wie durch die eckige Klammer angedeutet ist.

Auch falls kein Rauschen modelliert wird, kann in der Optimierung optional die Regularisierungsfunktion θ₂ berücksichtigt werden. So kann die Regularisierung mittels der Regularisierungsfunktion θ₂ beispielsweise auch dafür (auch zusätzlich zur Berücksichtigung von Rauschen) verwendet werden, dass ungültige Bildpunkte p passend bestimmt oder interpoliert werden. Auch im Falle eines Bayer-Pattern Bildsensors kann die Regularisierung mittels der Regularisierungsfunktion θ₂ dafür sorgen (auch zusätzlich zur Berücksichtigung von Rauschen), dass unbekannte RGB Bildpunkte p rekonstruiert werden. Die Regularisierungsfunktion θ₂ ist damit nicht nur an die Berücksichtigung von Rauschen geknüpft.

Es können die gleichen Lösungsalgorithmen wie oben angemerkt verwendet werden.

Damit können verschiedenste, Bildstörungen im aufgenommenen störungsbehafteten Bild F hervorrufende Einflussfaktoren direkt in einem Optimierungsproblem und in einem Schritt berücksichtigt werden. Die Nachteile der bisherigen Vorgehensweise können damit nicht mehr auftreten, weil diese Bildstörungen allesamt in einem Schritt korrigiert werden und nicht hintereinander wie bisher. Allfällige Querabhängigkeiten der einzelnen Bildkorrekturen sind dabei durch die Modellierung mittels der einzelnen Störungsmatrizen implizit berücksichtigt.

Auch hier gilt natürlich, dass durch die Bildkorrektur eine Bildstörung in der Bildaufnahme 1 reduziert wird und in der Regel nicht, oder nur in Ausnahmefällen, zur Gänze eliminiert wird.

Das Optimierungsproblem kann damit beispielsweise in der Form ${min}_{U} {{\frac{μ}{k} {\left‖AU-F\right‖}_{k}^{k}}_{︸}}_{{θ}_{1}} \left[+{θ}_{2}\left(U\right)\right]$ angeschrieben werden, mit einem vorgegebenen Regularisierungsparameter µ. Darin bezeichnet k eine bestimmte Norm, beispielsweise k=1, 2, wobei aber natürlich auch eine andere Zielfunktion θ₁ definiert sein kann. θ₂ kann wie oben beschrieben, oder auch in anders geeigneter Form, definiert sein.

Um ungültige Bildpunkte zu berücksichtigen kann zusätzlich eine Auswahlmatrix S berücksichtigt werden, die bei Vektor-Matrix-Notation von Natur aus eine Diagonalmatrix der Dimension k ist. Die Matrixelemente S[p,p] sind definiert als S[p,p] = 1 für gültige Bildpunkte p und als S[p,p] = 0 für ungültige Bildpunkte p. Die ungültigen Bildpunkte p sind im störungsbehafteten Bild U und im störungsreduzierten Bild F zu berücksichtigen, was zu *SF = S*(*AU*[+*η*]) führt. Mit *F̃ = SF, Ã* = *SA* und *η̃* = *Sη* führt das zu *F̃* = *ÃU*[+η̃] und ${min}_{U} {θ}_{1} \left(U, {F}^{˜}, {A}^{˜}\right) \left[+{θ}_{2}\left(U\right)\right]$, beispielsweise ${min}_{U} {{\frac{μ}{k} {\left‖{A}^{˜}U-{F}^{˜}\right‖}_{k}^{k}}_{︸}}_{{θ}_{1}} \left[+{θ}_{2}\left(U\right)\right]$, was analog zu oben beschrieben mit Berücksichtigung der ungültigen Bildpunkte p gelöst werden kann. Bezeichnet Ω_{X} die Menge der ungültigen Bildpunkte p, dann könnten ungültige Bildpunkte alternativ auch derart berücksichtigt werden, dass das Residuum des Optimierungsproblems nur für die gültigen Bildpunkte ausgewertet wird, was mathematisch in der Form ${min}_{U} {{\frac{μ}{k} {\left‖AU-F\right‖}_{k , Ω \ {Ω}_{X}}^{k}}_{︸}}_{{θ}_{1}} \left[+{θ}_{2}\left(U\right)\right]$ ausgedrückt werden kann, wobei ",Ω\Ω_{X}" die betrachteten Bildpunkte p ohne die ungültigen Bildpunkte angibt. Für die ungültigen Bildpunkte könnte dann interpoliert werden, oder die ungültigen Bildpunkte könnten durch die zusätzliche Regularisierung mit θ₂ automatisch durch Lösen des Optimierungsproblems in geeigneter Weise berechnet werden.

Im Falle eines mehrkanaligen Bildsensors 4, beispielsweise ein RGB-Bildsensor, erhält man ein solches Optimierungsproblem für jeden Kanal.

Die gegenständliche Erfindung ist aber auch für andere Typen von Bildsensoren 4 einsetzbar. Ein häufig verwendeter Typ eine Bildsensors 4 ist ein hinlänglich bekannter Bayer-Pattern Bildsensor, was einem mit einem schachbrettartigen Farbfilter (üblicherweise mit den Farben rot, grün, blau) überzogenen Bildsensor 4 entspricht. Jeder Bildpunkt p des Bildsensors 4 wird dabei mit einer bestimmten Farbe gefiltert. Um eine Bildaufnahme 1 mit einer der Anzahl n der Bildpunkte p entsprechenden Auflösung für jeden Kanal der Bildaufnahme 1 zu erhalten, müssen folglich eine große Anzahl von Bildpunkten pro Kanal rekonstruiert werden, beispielsweise durch Interpolation. Das erfindungsgemäße Vorgehen erlaubt es nun, sogar solche Transformationen direkt zu berücksichtigen.

Die Transformation, beispielsweise von RGB zu Bayer-Pattern, kann in Vektor-Matrix-Notation durch eine Transformationsmatrix B beschrieben werden, wobei die Matrixelemente B[i,j] definiert sind als B[i,j] = 1 wenn der Bildpunkt j durch den Bildpunkt i in der Bildaufnahme 1 gegeben ist und ansonsten B[i,j] = 0. Daraus ergibt sich *F = AU*[+*η*] mit A=MBC. Hierbei gibt es eine Transformationsmatrix B, die alle drei RGB-Kanäle auf den Bayer-Pattern Sensor abbildet. Die Dimension der Matrix B ist demnach (n) x (3n) (also n Zeilen und 3n Spalten), wobei n die Anzahl der Bildpunkte p des Bayer-Pattern Sensors ist. Es ist offensichtlich, dass das zu einem äquivalenten Optimierungsproblem wie oben skizziert führt, wobei die Transformation aber direkt in der Lösung des Optimierungsproblems enthalten ist. Auch in diesem Fall könnten ungültige Bildpunkte p zusätzlich wie oben beschrieben über eine Auswahlmatrix S berücksichtigt werden, also *SF = S*(*AU*[+*η*]).

Unter der Annahme räumlich varianter Bildstörungen durch Faltungs-Einflussfaktoren wird für jeden Bildpunkt p einzeln die Bildstörung modelliert. Das führt aufgrund der Faltungsstörungsmatrix C zu sehr großen Gleichungssystemen, was die Optimierung rechenintensiv macht.

Der Rechenaufwand für die Bildkorrektur kann reduziert werden, wenn in der Bildaufnahme 1 eine Anzahl d ≥ 1 Bildpunktbereiche definiert werden, in denen die Bildstörung jeweils räumlich invariant angenommen wird. In einem solchen Bildpunktbereich wird somit angenommen, dass die Bildstörung durch Faltungs-Einflussfaktoren für jeden Bildpunkt p in diesem Bildpunktbereich gleich ist. Eine solche Annahme kann beispielsweise getroffen werden, wenn die Bildstörung zwar räumlich variant ist, sich aber in verschiedenen Bildpunktbereichen (als Untermenge der Gesamtmenge an Bildpunkten p) nur sehr langsam ändert. Die Bildstörung kann sich in d verschiedenen Bildpunktbereichen aber ändern und die d Bildpunktbereiche können sich dabei auch teilweise überlappen. Damit kann für jeden der Anzahl d Bildpunktbereiche mit räumlich invarianter Bildunschärfe das Optimierungsproblem effizienter und unabhängig von den anderen Bildpunktbereichen gelöst werden. Das störungsreduzierte Bild U kann dann aus den Lösungen für die einzelnen Bildpunktbereiche zusammengesetzt werden. Es ist damit natürlich auch möglich zumindest einen Bildpunktbereich mit räumlich invarianter Bildstörung und zumindest einen Bildpunktbereich mit räumlich varianter Bildstörung zu berücksichtigen

Unter der Annahme einer räumlich invarianten, also räumlich konstanten, Bildstörung, kann das Optimierungsproblem für einen Bildpunktbereich mit räumlich invarianter Bildstörung vereinfacht werden. Es ergibt sich dabei für jeden der Anzahl d von Bildpunktbereichen mit räumlich invarianter Bildstörung ein lineares, lokales Gleichungssystem, der Form *F^{d}* = *M^{d}* (*C^{d} * U^{d}*)[+*η^{d}*]. Die Matrixmultiplikation wird darin durch eine einfache Faltung ersetzt. Diese lokalen linearen Gleichungssysteme lassen sich mit weniger Rechenaufwand lösen.

Das gilt natürlich auch wenn man zusätzlich die Auswahlmatrix S oder eine Transformationsmatrix B berücksichtigt, also *S^{d} F^{d} = S^{d}* (*M^{d}* (*C^{d}* **U^{d}*)[+*η^{d}*]) oder *F^{d}* = *M^{d}B^{d}* (*C^{d}* * *U^{d}*)[+*η^{d}*] oder *S^{d}F^{d} = S^{d}* (*M^{d}B^{d}* (*C^{d}* **U^{d}*)[+*η^{d}*]).

Das Verfahren zur Bildkorrektur ist auf einer Bildkorrektureinheit 10 implementiert, wie in Fig.2 dargestellt. Die Bildkorrektureinheit 10 ist Computerhardware, auf der ein Lösungsalgorithmus für das Optimierungsproblem als Computersoftware implementiert ist. Die Bildkorrektureinheit 10 erhält die Einzelfaltungsmatrizen Cᵢ für die zu berücksichtigenden Faltungs-Einflussfaktoren (wie Bewegungsunschärfe, Linsenunschärfe), gegebenenfalls getrennt für jeden definierten Bildpunktbereich, und auch die Einzelmultiplikationsmatrizen Mᵢ und ermittelt daraus die Faltungs-Bildstörungsmatrix C (gegebenenfalls für jeden Bildpunktbereich) und die multiplikative Bildstörungsmatrix M. Alternativ kann die Bildkorrektureinheit 10 auch direkt die Faltungs-Bildstörungsmatrix C (gegebenenfalls für jeden Bildpunktbereich) und die multiplikative Bildstörungsmatrix M erhalten. Gegebenenfalls erhält die Bildkorrektureinheit 10 auch eine Auswahlmatrix S und/oder eine Transformationsmatrix B (in Fig.2 nicht dargestellt). Die Bildkorrektureinheit 10 erhält eine Bildaufnahme 1 mit einem störungsbehafteten Bild F als Eingang und ermittelt daraus durch Lösen des Optimierungsproblem eine Bildaufnahme 1 mit einem störungsreduzierten Bild U als Ausgang (bzw. Lösung der Optimierung).

Abschließend sei angemerkt, dass anstelle der Vektor-Matrix-Notation in äquivalenter Weise auch eine Matrix-Notation verwendet werden kann, in der die Bildpunkte p nicht als Vektor gegeben sind, sondern als Matrix. Eine solche Notation kann aber immer in eine Vektor-Matrix-Notation überführt werden, weshalb die Erfindung in der Vektor-Matrix-Notation beschrieben wird, die aber auf jeden Fall auch eine solche andere Notation umfasst und dazu äquivalent ist. In der Matrix-Notation würde beispielsweise jedes Matrixelement einer Einzelmultiplikationsmatrix Mᵢ den multiplikativen Einfluss auf einen Bildpunkt p beschreiben - die Einzelmultiplikationsmatrix Mᵢ wäre damit keine Diagonalmatrix mehr. Die multiplikative Bildstörungsmatrix M ergäbe sich dann aus einer elementweisen Multiplikation der Einzelmultiplikationsmatrizen Mᵢ. In der Matrix-Notation wäre die Faltungs-Bildstörungsmatrix C ein Tensor entsprechender Stufe und anstelle eines Matrixprodukts käme ein entsprechendes Tensorprodukt zur Anwendung. Auch in anderer Notation als in Vektor-Matrix-Notation, wäre aber das grundsätzliche erfindungsgemäße Vorgehen gleich.

## Patentansprüche

1. Verfahren zur Bildkorrektur eines störungsbehafteten Bildes (F) eines Objekts (2) in ein störungsreduziertes Bild (U) des Objekts (2), wobei mit einem Bildsensor (4) einer Digitalkamera (3) eine Bildaufnahme (1) des Objekts (2) aufgenommen wird und die Bildaufnahme (1) aus einer Mehrzahl n von Bildpunkten (p) besteht und aufgrund verschiedener Einflussfaktoren das störungsbehaftete Bild (F) des Objekts (2) enthält, wobei ein Zusammenhang zwischen dem aufgenommenen störungsbehafteten Bild (F) des Objekts (2) und dem störungsreduzierten Bild (U) des Objekts (2) in Vektor-Matrix-Notation mit einen Bildstörungsoperator (A) beschrieben wird, insbesondere in der Form *F = AU*, wobei das störungsbehaftete Bild (F) und das störungsreduzierte Bild (U) als die Mehrzahl n Bildpunkte (p) umfassende Vektoren beschrieben werden und der Bildstörungsoperator (A) als Matrix der Dimension n x n beschrieben wird, und das störungsreduzierte Bild (U) aus dem aufgenommenen störungsbehafteten Bild (F) mittels einer in einer Bildkorrektureinheit (10) durchgeführten Optimierung ${min}_{U} {θ}_{1} \left(U, F, A\right)$ gewonnen wird, wobei θ₁ eine vorgegebene Zielfunktion der Optimierung ist, die eine Abweichung zwischen dem störungsbehafteten Bild (F) und dem transformierten störungsreduzierten Bild AU bewertet, **dadurch gekennzeichnet, dass** eine Anzahl N_{M} bekannter multiplikativer Einflussfaktoren und eine Anzahl N_{C} bekannter Faltungseinflussfaktoren der Bildaufnahme (1) berücksichtigt werden, **dass** ein multiplikativer Einflussfaktor einen multiplikativen Faktor zwischen einem Bildpunkt (p) im störungsreduzierten Bild (U) und demselben Bildpunkt (p) im störungsbehafteten Bild (F) beschreibt und jeder multiplikative Einflussfaktor in Vektor-Matrix-Notation als Einzelmultiplikationsmatrix (Mᵢ) in Form einer Diagonalmatrix mit einem Matrixelement in der Diagonale für jeden Bildpunkt (p) beschrieben wird und aus der Anzahl N_{M} der Einzelmultiplikationsmatrizen (Mᵢ) eine Multiplikationsmatrix M als Matrixprodukt der Einzelmultiplikationsmatrizen (Mᵢ) ermittelt wird, **dass** ein Faltungs-Einflussfaktor den Einfluss mehrerer Bildpunkte (p) des störungsreduzierten Bildes (U) auf einen Bildpunkt (p) des störungsbehafteten Bildes (F) beschreibt und jeder Faltungs-Einflussfaktor in Form einer Einzelfaltungsmatrix (Cᵢ) beschrieben wird, wobei in Vektor-Matrix-Notation jede Zeile der Einzelfaltungsmatrix (Cᵢ) beschreibt, wie ein Bildpunkt (p) im störungsbehafteten Bild (F) durch die Bildpunkte (p) im störungsreduzierten Bild (U) beeinflusst wird, und aus der Anzahl N_{C} der Einzelfaltungsmatrizen (Cᵢ) eine Faltungsmatrix C als Matrixprodukt der Einzelfaltungsmatrizen (Cᵢ) ermittelt wird, **und dass** ein Matrixprodukt der Multiplikationsmatrix M und der Faltungsmatrix C als Korrekturoperator (A), also A=MC, verwendet wird.

2. Verfahren nach Anspruch 1, **dadurch gekennzeichnet, dass** das störungsreduzierte Bild (U) aus dem aufgenommenen störungsbehafteten Bild (F) mittels einer in der Bildkorrektureinheit (10) durchgeführten Optimierung ${min}_{U} {θ}_{1} \left(U, F, A\right) + {θ}_{2} \left(U\right)$ gewonnen wird, mit einer zusätzlichen vorgegebenen Regularisierungsfunktion θ₂.

3. Verfahren nach Anspruch 1 oder 2, **dadurch gekennzeichnet, dass** als Zusammenhang zwischen dem aufgenommene störungsbehafteten Bild (F) und dem störungsreduzierten Bild (U) *F = AU* + *η* verwendet wird, wobei *η* ein mit dem Bildsensor (4) aufgenommenes Rauschen beschreibt und die Optimierung in Form von ${min}_{U} {θ}_{1} \left(U, F, A\right) + {θ}_{2} \left(U\right)$ gelöst wird, mit einer vorgegebenen Regularisierungsfunktion θ₂, über die das Rauschen berücksichtigt wird.

4. Verfahren nach einem der Ansprüche 1 bis 3, **dadurch gekennzeichnet, dass** als Einzelfaltungsmatrix (Cᵢ) zumindest eine vorgegebene Punktspreizfunktion zur Korrektur einer Linsenunschärfe und/oder ein vorgegebener Blur Operator zu Korrektur einer Bewegungsunschärfe verwendet wird.

5. Verfahren nach einem der Ansprüche 1 bis 4, **dadurch gekennzeichnet, dass** als Bildsensor (4) ein Bayer-Pattern Bildsensor verwendet wird und eine Transformation, von Bayer-Pattern zum störungsreduzierten Bildes (U) durch eine Transformationsmatrix B beschrieben wird, wobei in Vektor-Matrix-Notation die Matrixelemente B[i,j] der Transformationsmatrix B definiert sind als B[i,j] = 1 wenn der Bildpunkt j durch den Bildpunkt i in der Bildaufnahme gegeben ist und ansonsten B[i,j] = 0, **und dass** sich der Bildstörungsoperator (A) aus einem Matrixprodukt A=MBC ergibt.

6. Verfahren nach einem der Ansprüche 1 bis 5, **dadurch gekennzeichnet, dass** ungültige Bildpunkte in der Bildaufnahme (1) durch eine Auswahlmatrix S berücksichtigt werden, wobei die Auswahlmatrix S in Vektor-Matrix-Notation eine Diagonalmatrix ist und ungültige Bildpunkte mit einem Matrixelement in der Diagonale mit dem Wert Null berücksichtigt, **und dass** die ungültigen Bildpunkte im störungsbehafteten Bild (U)und im störungsreduzierten Bild (F) in der Form *SF = S*(*AU*[+*η*]) oder *SF = S*(*AU* + *η*) berücksichtigt werden, was mit *F̃* = *SF*, *Ã* = *SA, η̃* = *Sη* und mit *F̃* = *ÃU*[+*η̃*] zur Optimierung ${min}_{U} {θ}_{1} \left(U, {F}^{˜}, {A}^{˜}\right) \left[+{θ}_{2}\left(U\right)\right]$ führt oder mit *F̃ = ÃU* + *η̃* zur Optimierung ${min}_{U} {θ}_{1} \left(U, F, A\right) + {θ}_{2} \left(U\right)$ führt.

7. Verfahren nach einem der Ansprüche 1 bis 4, **dadurch gekennzeichnet, dass** in der Bildaufnahme (1) eine Anzahl d von Bildpunktbereichen mit räumlich invarianter, durch einen Faltungs-Einflussfaktor verursachter Bildstörung angenommen wird, wodurch sich der Zusammenhang zwischen dem störungsbehafteten Bild (F) und dem störungsreduzierten Bild (U) für jeden dieser Bildpunktbereiche mittels einer Faltung * zu *F^{d}* = *M^{d}* (*C^{d}* * *U^{d}*)[+*η^{d}*] vereinfacht, **dass** die Optimierung für jeden Bildpunktbereich gelöst wird **und dass** das störungsreduzierte Bild (U) aus den einzelnen Bildpunktbereichen zusammengesetzt wird.

8. Verfahren nach Anspruch 7, **dadurch gekennzeichnet, dass** zusätzlich eine Auswahlmatrix S zur Berücksichtigung ungültiger Bildpunkte und/oder eine Transformationsmatrix B zur Transformation auf einen anderen Bildsensor berücksichtigt wird.

## Claims

1. A method for image correction of a disturbed image (F) of an object (2) to produce an image (U) with reduced disturbances of the object (2), wherein a captured image (1) of the object (2) is taken using an image sensor (4) of a digital camera (3) and the captured image (1) consists of a plurality n of image points (p) and contains the disturbed image (F) of the object (2) due to various influence factors, wherein a relationship between the captured disturbed image (F) of the object (2) and the image (U) with reduced disturbances of the object (2) is described in vector-matrix notation with an image disturbance operator (A), in particular in the form *F* = *AU*, wherein the disturbed image (F) and the image (U) with reduced disturbances are described as vectors comprising the plurality of n image points (p), and the image disturbance operator (A) is described as a matrix of dimension n x n, and the image (U) with reduced disturbances is obtained from the captured disturbed image (F) by means of an optimization ${min}_{U} {θ}_{1} \left(U, F, A\right)$ carried out in an image correction unit (10), where θ₁ is a given objective function of the optimization that evaluates a deviation between the disturbed image (F) and the transformed image AU with reduced disturbances, **characterized in that** a number N_{M} of known multiplicative influence factors and a number N_{C} of known convolutional influence factors of the captured image (1) are taken into account, **in that** a multiplicative influence factor describes a multiplicative factor between an image point (p) in the image (U) with reduced disturbances and the same image point (p) in the disturbed image (F), and each multiplicative influence factor is described in vector-matrix notation as an individual multiplication matrix (Mᵢ) in the form of a diagonal matrix having a matrix element in the diagonal for each image point (p), and a multiplication matrix M is ascertained from the number N_{M} of single multiplication matrices (Mᵢ) as a matrix product of the individual multiplication matrices (Mᵢ), **in that** a convolutional influence factor describes the influence of several image points (p) of the image (U) with reduced disturbances on an image point (p) of the disturbed image (F) and each convolutional influence factor is described in the form of an individual convolution matrix (Cᵢ), wherein each row of the individual convolution matrix (Cᵢ) describes, in vector-matrix notation, how an image point (p) in the disturbed image (F) is influenced by the image points (p) in the image (U) with reduced disturbances, and a convolution matrix C is ascertained from the number N_{C} of individual convolution matrices (Cᵢ) as a matrix product of the individual convolution matrices (Cᵢ), **and in that** a matrix product of the multiplication matrix M and the convolution matrix C is used as image disturbance operator (A), i.e., A=MC.

2. The method according to claim 1, **characterized in that** the image (U) with reduced disturbances is obtained from the captured disturbed image (F) by means of an optimization ${min}_{U} {θ}_{1} \left(U, F, A\right) + {θ}_{2} \left(U\right)$ carried out in the image correction unit (10) with an additional predefined regularization function θ₂.

3. The method according to claim 1 or 2, **characterized in that** *F* = *AU* + *η* is used as the relationship between the captured disturbed image (F) and the image (U) with reduced disturbances, wherein *η* describes a noise recorded by the image sensor (4), and the optimization is solved in the form of ${min}_{U} {θ}_{1} \left(U, F, A\right) + {θ}_{2} \left(U\right)$ with a predefined regularization function θ₂ that takes noise into account.

4. The method according to one of claims 1 to 3, **characterized in that,** as an individual convolution matrix (Cᵢ), at least one predefined point spread function to correct lens blur and/or a predefined blur operator to correct motion blur is used.

5. The method according to one of claims 1 to 4, **characterized in that** a Bayer-pattern image sensor is used as the image sensor (4) and a transformation from the Bayer-pattern to the image (U) with reduced disturbances is described by a transformation matrix B, wherein the matrix elements B[i,j] of the transformation matrix B are defined in vector-matrix notation as B[i,j] = 1 if the image point j is given by the image point i in the captured image, and otherwise B[i,j] = 0, **and in that** the image disturbance operator (A) results from a matrix product A=MBC.

6. The method according to one of claims 1 to 5, **characterized in that** invalid image points in the captured image (1) are taken into account by a selection matrix S, wherein the selection matrix S is a diagonal matrix in vector-matrix notation wherein invalid image points are taken into account by a matrix element in the diagonal having the value zero, **and in that** the invalid image points are taken into account in the disturbed image (F) and in the image (U) with reduced disturbances in the form *SF = S*(*AU*[*+η*]) or *SF* = *S*(*AU* + *η*), which results in the optimization ${min}_{U} {θ}_{1} \left(U, {F}^{˜}, {A}^{˜}\right) \left[+{θ}_{2}\left(U\right)\right]$ with *F̃* = *SF*, *Ã* = *SA*, *η̃* = *Sη* and *F̃* = *AU*[*+η̃*], and in the optimization ${min}_{U} {θ}_{1} \left(U, {F}^{˜}, {A}^{˜}\right) + {θ}_{2} \left(U\right)$ with *F̃* = *ÃU* + *η̃*.

7. The method according to one of claims 1 to 4, **characterized in that,** in the captured image (1), a number d of image point areas having a spatially invariant image disturbance caused by a convolutional influence factor is assumed, whereby, for each of these image point areas, the relationship between the disturbed image (F) and the image (U) with reduced disturbances is simplified by convolution * to *F^{d}* = *M^{d}* (*C^{d}* * *U^{d}*)[+*η^{d}*], **in that** the optimization is solved for each image point area, **and in that** the image (U) with reduced disturbances is assembled from the individual image point areas.

8. The method according to claim 7, **characterized in that,** in addition, a selection matrix S to account for invalid image points and/or a transformation matrix B for transformation to another image sensor is taken into account.

## Revendications

1. Procédé permettant la correction d'image d'une image perturbée (F) d'un objet (2) pour obtenir une image à perturbations réduites (U) de l'objet (2), dans lequel une prise de vue (1) de l'objet (2) est capturée à l'aide d'un capteur d'image (4) d'un appareil photographique numérique (3) et la prise de vue (1) se compose d'une pluralité n de points d'image (p) et contient, sur la base de différents facteurs d'influence, l'image perturbée (F) de l'objet (2), dans lequel une relation entre l'image perturbée (F) capturée de l'objet (2) et l'image à perturbations réduites (U) de l'objet (2) est décrite en notation vectorielle-matricielle comportant un opérateur de perturbation d'image (A), en particulier sous la forme *F = AU,* dans lequel l'image perturbée (F) et l'image à perturbations réduites (U) sont décrites comme des vecteurs comprenant la pluralité n de points d'image (p) et l'opérateur de perturbation d'image (A) est décrit comme une matrice de dimension n x n, et l'image à perturbations réduites (U) est obtenue à partir de l'image perturbée (F) capturée au moyen d'une optimisation ${min}_{U} {θ}_{1}$ *(U,F,A)* réalisée dans une unité de correction d'image (10), où θ₁ est une fonction cible prédéfinie de l'optimisation, laquelle fonction cible évalue un écart entre l'image perturbée (F) et l'image à perturbations réduites transformée AU, **caractérisé en ce qu'**un nombre NM de facteurs d'influence multiplicatifs connus et un nombre Nc de facteurs d'influence de convolution connus de la prise de vue (1) sont pris en compte, **en ce qu**'un facteur d'influence multiplicatif décrit un facteur multiplicatif entre un point d'image (p) dans l'image à perturbations réduites (U) et le même point d'image (p) dans l'image perturbée (F), et chaque facteur d'influence multiplicatif est décrit en notation vectorielle-matricielle comme une matrice de multiplication individuelle (Mᵢ) sous forme de matrice diagonale comportant un élément matriciel sur la diagonale pour chaque point d'image (p), et une matrice de multiplication M est déterminée en tant que produit matriciel des matrices de multiplication individuelles (Mᵢ) à partir du nombre NM de matrices de multiplication individuelles (Mᵢ), **en ce qu**'un facteur d'influence de convolution décrit l'influence de plusieurs points d'image (p) de l'image à perturbations réduites (U) sur un point d'image (p) de l'image perturbée (F) et chaque facteur d'influence de convolution est décrit sous forme de matrice de convolution individuelle (Cᵢ), dans lequel chaque ligne de la matrice de convolution individuelle (Cᵢ) décrit, en notation vectorielle-matricielle, comment un point d'image (p) dans l'image perturbée (F) est influencé par les points d'image (p) dans l'image à perturbations réduites (U), et une matrice de convolution C est déterminée en tant que produit matriciel des matrices de convolution individuelles (Cᵢ) à partir du nombre Nc de matrices de convolution individuelles (Cᵢ), **et en ce qu**'un produit matriciel de la matrice de multiplication M et de la matrice de convolution C est utilisé comme opérateur de correction (A), c'est-à-dire A = MC.

2. Procédé selon la revendication 1, **caractérisé en ce que** l'image à perturbations réduites (U) est obtenue à partir de l'image perturbée (F) capturée au moyen d'une optimisation ${min}_{U} {θ}_{1} \left(U, F, A\right) + {θ}_{2} \left(U\right)$ réalisée dans l'unité de correction d'image (10), avec une fonction de régularisation θ₂ prédéfinie supplémentaire.

3. Procédé selon la revendication 1 ou 2, **caractérisé en ce que** *F = AU + η* est utilisé comme relation entre l'image perturbée (F) capturée et l'image à perturbations réduites (U), où *η* décrit un bruit capturé au moyen du capteur d'image (4) et l'optimisation est résolue sous la forme ${min}_{U} {θ}_{1} \left(U, F, A\right) + {θ}_{2} \left(U\right)$, avec une fonction de régularisation θ₂ prédéfinie, par l'intermédiaire de laquelle le bruit est pris en compte.

4. Procédé selon l'une des revendications 1 à 3, **caractérisé en ce qu'**on utilise comme matrice de convolution individuelle (Ci) au moins une fonction d'étalement ponctuel prédéfinie pour la correction d'une défocalisation de lentille et/ou un opérateur de flou prédéfini pour la correction d'une défocalisation de mouvement.

5. Procédé selon l'une des revendications 1 à 4, **caractérisé en ce qu'**un capteur d'image à motif de Bayer est utilisé comme capteur d'image (4) et une transformation du motif de Bayer vers l'image à perturbations réduites (U) est décrite par une matrice de transformation B, dans lequel les éléments matriciels B[i,j] de la matrice de transformation B sont définis, en notation vectorielle-matricielle, par B[i,j] = 1 si le point d'image j est donné par le point d'image i dans la prise de vue, sinon par B[i,j] = 0, **et en ce que** l'opérateur de perturbation d'image (A) est obtenu par un produit matriciel A = MBC.

6. Procédé selon l'une des revendications 1 à 5, **caractérisé en ce que** des points d'image invalides dans la prise de vue (1) sont pris en compte par une matrice de sélection S, dans lequel la matrice de sélection S est, en notation vectorielle-matricielle, une matrice diagonale et prend en compte des points d'image invalides comportant un élément matriciel sur la diagonale et comportant la valeur zéro, **et en ce que** les points d'image invalides dans l'image perturbée (F) et dans l'image à perturbations réduites (U) sont pris en compte sous la forme *SF = S(AU*[ *+ η]* ou *SF = S(AU + η*), où *F̃* = *SF, Ã* = *SA, η̃* = *Sη* et *F̃ = ÃU[* + *η̃]* pour l'optimisation ${min}_{U} {θ}_{1} \left(U, {F}^{˜}, {A}^{˜}\right) \left[+{θ}_{2}\left(U\right)\right] ou {F}^{˜} = {A}^{˜} U + {η}^{˜}$ pour l'optimisation ${min}_{U} {θ}_{1} \left(U, {F}^{˜}, {A}^{˜}\right) + {θ}_{2} \left(U\right)$.

7. Procédé selon l'une des revendications 1 à 4, **caractérisé en ce que,** dans la prise de vue (1), un nombre d de zones de points d'image comportant une perturbation d'image invariante dans l'espace et causée par un facteur d'influence de convolution est admis, moyennant quoi la relation entre l'image perturbée (F) et l'image à perturbations réduites (U) est simplifiée pour chacune desdites zones de points d'image au moyen d'une convolution * où *F^{d} = M^{d} (C^{d} * U^{d})[+ η^{d}])*, **en ce que** l'optimisation est résolue pour chaque zone de points d'image **et en ce que** l'image à perturbations réduites (U) est composée à partir des zones de points d'image individuelles.

8. Procédé selon la revendication 7, **caractérisé en ce qu'**on prend en outre en compte une matrice de sélection S pour la prise en compte de points d'image invalides et/ou une matrice de transformation B pour la transformation d'un autre capteur d'image.
